# EUROPÄISCHE PATENTSCHRIFT

(11) **EP 2 314 471 B1**
(45) Veröffentlichungstag und Bekanntmachung des Hinweises auf die Patenterteilung: **10.10.2018**
(21) Anmeldenummer: 10008506.7
(22) Anmeldetag: 14.08.2010
(51) Int. Cl.: B60J 5/04

(54) **Fahrzeugtür mit einer Leitungsdurchführung an einer Wandung**
Vehicle door with a cable bushing on a wall
Porte de véhicule dotée d'une traversée de câble sur une paroi

(30) Priorität: 22.10.2009 DE 102009050229
(43) Veröffentlichungstag der Anmeldung: 27.04.2011
(73) Patentinhaber: Audi AG, 85045 Ingolstadt (DE)
(72) Erfinder: Bönsel, Jürgen, 85113 Böhmfeld (DE)

(56) Entgegenhaltungen:
- EP-A1- 1 291 211
- DE-A1- 10 339 159
- DE-A1- 19 653 733
- JP-A- 2001 088 552
- US-A1- 2003 186 574

## Beschreibung

Fahrzeugtür mit einer Leitungsdurchführung an einer Wandung, insbesondere zur Durchführung eines elektrischen Leitungsstrangs von einem Nassraum der Fahrzeugtür zu einem Trockenraum.

Derartige Leitungsdurchführungen werden bei Fahrzeugtüren zur flüssigkeitsdichten Durchführung eines Leitungsstrangs durch eine Wandung, wie beispielsweise durch das Türinnenblech, verwendet.

Die gattungsbildende DE 196 53 733 A1 zeigt eine Vorrichtung zur Herstellung einer elektrischen Steckverbindung zwischen elektrischen oder elektronischen Bauteilen oder Baugruppen durch die Öffnung in einer Wandung innerhalb einer Fahrzeugtür, wie beispielsweise einem Türinnenblech, wobei die Bauteile oder Baugruppen durch wenigstens einen Bauteilhalter in der Fahrzeugtür mechanisch festlegbar sind. Die Wandung teilt die Fahrzeugtür in einen Nassraum und einen Trockenraum. Zumindest ein Teil des Bauteilhalters wenigstens eines der elektrisch zu verbindenden Bauteile oder Baugruppen ist als elektrischer Steckverbinder ausgebildet, der die Öffnung der Wandung durchgreift. Der Bauteilhalter und das elektrische oder elektronische Bauteil sind in einem gemeinsamen Gehäuse untergebracht und der Durchgriff durch die Wandung ist gegen Feuchtigkeit abgedichtet.

Als Nachteil ist zu nennen, dass nur die elektrischen Leitungen durch die Wandung durchgeleitet werden können, die zu den in dem selben Gehäuse befindlichen elektrischen oder elektronischen Bauteilen gehören. Eine Erweiterung der Verkabelung zur Nassraumseite über das Gehäuse hinaus, wodurch weitere Komponenten an das elektrische oder elektronische Bauteil angeschlossen werden könnten, ist nicht möglich.

Die DE 103 39 159 A1 offenbart eine Baugruppe eines Kraftfahrzeugs mit einer Struktur, die einen Kraftfahrzeuginnenraum in einen Nassraum und einen Trockenraum teilt und einem Steuergerät mit einem Gehäuse und einer in dem Gehäuse angeordneten Elektronik, wobei in einer Öffnung der Struktur das Gehäuse des Steuergeräts montierbar ist und die Elektronik des montierten Steuergeräts sowohl von der Nassraumseite, als auch von der Trockenraumseite aus anschließbar ist. Das Gehäuse des Steuergeräts besteht aus zwei Hälften und durchsetzt die Öffnung derart, dass eine Hälfte im Wesentlichen auf der Trockenraumseite und die andere Hälfte im Wesentlichen auf der Nassraumseite liegt.

Nachteilig ist hier, dass eine vergleichsweise große Öffnung in der Struktur vorgesehen werden muss, die bei Bedarf von einem Steuergerät durchsetzt wird. Für den Fall, dass das Steuergerät nicht benötigt wird, muss diese Öffnung aufwändig abgedichtet werden, was aufgrund der Größe sehr kostenintensiv ist.

Aufgabe der vorliegenden Erfindung ist es daher eine Fahrzeugtür bereitzustellen, bei der eine Leitungsdurchführung an einer Wandung mit einer möglichst kleinen Öffnung in der Wandung realisierbar ist und bei der beiderseits der Wandung die elektrischen Leitungen unterschiedlicher Bauteile flexibel angeschlossen werden können.

Diese Aufgabe wird durch die Merkmale des Patentanspruchs 1 gelöst.

Eine Fahrzeugtür mit einer Leitungsdurchführung an einer Wandung wird von der Wandung in eine Nassraumseite und eine Trockenraumseite geteilt, wobei an der Nassraumseite der Wandung ein in einem Gehäuse befindliches, elektrisches Bauteil angeordnet ist, das eine erste elektrische Steckverbindung aufweist, die eine Öffnung in der Wandung durchdringt und von der Trockenraumseite aus kontaktierbar ist, wobei das elektrische Bauteil eine zweite elektrische Steckverbindung aufweist, die von der Nassraumseite aus kontaktierbar ist und wobei die erste und die zweite Steckverbindung miteinander elektrisch verbunden sind.

Indem das in einem Gehäuse befindliche elektrische Bauteil auf der Nassraumseite der Wandung angebracht wird und nur die erste elektrische Steckverbindung eine Öffnung in der Wandung durchdringt, kann die Öffnung relativ klein gehalten werden. An dem Gehäuse ist eine zweite elektrische Steckverbindung ausgebildet, die von der Nassraumseite aus kontaktierbar ist, während die erste Steckverbindung von der Trockenraumseite aus kontaktierbar ist. Die erste und die zweite elektrische Steckverbindung sind intern über das elektrische Bauteil verbunden, so dass elektrische Signale von der ersten zur zweiten Steckverbindung und umgekehrt geleitet werden können. Das elektrische Bauteil kann dabei als Platine, Kabelstrang, Motor, etc. ausgebildet sein. Dadurch ist es möglich, dass elektrische oder elektronische Komponenten auf der Nassraumseite an das Bordnetz des Fahrzeugs auf der Trockenraumseite angeschlossen werden können, ohne dass eine weitere Öffnung in der Wandung benötigt wird, die wiederum aufwändig abgedichtet werden müsste. Ist die elektrische oder elektronische Komponente auf der Nassraumseite nur optional verfügbar, so kann das selbe elektrische Bauteil mit dem selben Gehäuse an der Wandung montiert werden, wobei nun zumindest die zweite Steckverbindung unbelegt bleibt. Damit ist die Leitungsdurchführung besonders flexibel in Bezug auf wechselnde Ausstattungsumfänge der Fahrzeugtür und es wird nur ein Gehäusetyp benötigt.

In einer bevorzugten Ausführung ist die erste Steckverbindung abgedichtet. Dadurch kann keine Flüssigkeit von der Nassraumseite der Fahrzeugtür durch die Öffnung in der Wandung auf die Trockenraumseite gelangen.

In einer bevorzugten Ausführung verrastet die erste Steckverbindung mit der Wandung. Indem die erste Steckverbindung mit der Wandung verrastet, kann deren Lage relativ zur Wandung besonders einfach festgelegt werden.

In einer bevorzugten Ausführung weist die erste Steckverbindung einen nassraumseitigen Flansch auf, wobei zwischen dem Flansch und der Wandung ein umlaufendes Dichtmittel gehalten wird. Da der nassraumseitige Flansch der ersten Steckverbindung das Dichtmittel, vorzugsweise einen Schaumstoff, nach dem Verrasten der ersten Steckverbindung mit der Wandung, fest gegen die Wandung drückt, kann die erste Steckverbindung besonders einfach abgedichtet werden.

In einer bevorzugten Ausführung kann bei einer nicht kontaktierten zweiten Steckverbindung keine Flüssigkeit in das Gehäuse eindringen. Dadurch bleibt das Gehäuse auch dann abgedichtet, wenn die zweite Steckverbindung nicht belegt ist.

In einer bevorzugten Ausführung ist die zweite Steckverbindung nach unten gerichtet. Wird die zweite Steckverbindung nach unten gerichtet, kann sich keine Flüssigkeit in der zweiten Steckverbindung sammeln, wodurch eine eventuelle Korrosion verlangsamt wird.

In einer bevorzugten Ausführung ist das elektrische Bauteil als elektrisches Türschloss ausgebildet und die zweite Steckverbindung von einem nassraumseitigen Leitungsstrang für ein schlüsselloses Zugangskontrollsystem ("keyless entry") kontaktierbar ist. Ist zumindest ein Teil des elektrischen Bauteils als elektrisches Türschloss ausgebildet und wird an die zweite Steckverbindung der Leitungsstrang für ein schlüsselloses Zugangskontrollsystem angeschlossen, so kann der nassraumseitige Leitungsstrang von einer gewöhnlich im Türgriff angeordneten Antenne des schlüssellosen Zugangskontrollsystems zum elektrischen Türschloss geführt werden. Dort können die Signale der Antenne zur Steuerung des Türschlosses verwendet oder über die erste Steckverbindung an das Bordnetz des Fahrzeugs weitergeleitet werden.

Die zweite Steckverbindung kann natürlich auch von jeder anderen elektrischen Komponente im Nassraum der Fahrzeugtür kontaktiert werden. Lediglich exemplarisch sei hier eine Türgriffbeleuchtung genannt.

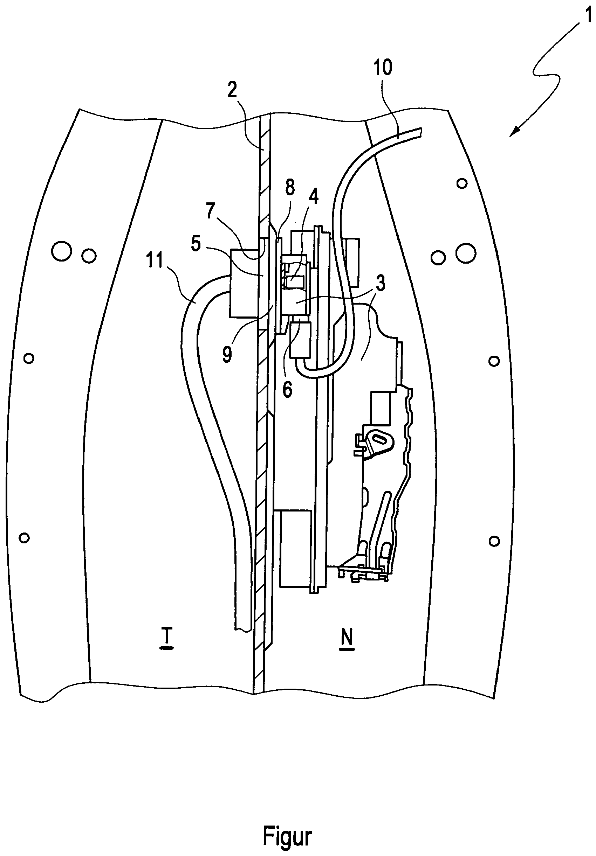

Weitere Einzelheiten, Merkmale und Vorteile der Erfindung ergeben sich aus der nachstehenden Beschreibung eines bevorzugten Ausführungsbeispiels unter Bezugnahme auf die Zeichnung.

Darin zeigt die **Figur** eine seitliche Ansicht einer erfindungsgemäßen Fahrzeugtür.

Gemäß der **Figur** wird eine Fahrzeugtür 1 von einer Wandung 2, wie beispielsweise einem Türinnenblech, in eine Nassraumseite N zwischen Wandung 2 und Türaußenblech, sowie in eine Trockenraumseite T zwischen Wandung 2 und Türinnenverkleidung, geteilt. Auf der Nassraumseite N wird ein elektrisches Bauteil 4, vorzugsweise ein Teil eines in dem Gehäuse befindlichen elektrischen Türschlosses, an der Wandung 2 befestigt. Das elektrische Bauteil 4 ist mit den restlichen Bauteilen des elektrischen Türschlosses in einem Gehäuse 3 angeordnet, welches aus zwei flüssigkeitsdicht miteinander verbundenen Halbschalen besteht. An dem Gehäuse 3 ist eine erste elektrische Steckverbindung 5 ausgebildet, die eine Öffnung 7 in der Wandung 2 durchdringt und auf der Trockenraumseite T mit einem trockenraumseitigen Leitungsstrang 11 verbunden werden kann. Die erste Steckverbindung 5 weist einen nassraumseitigen Flansch 8 auf, wobei zwischen dem Flansch 8 und der Wandung 2 ein Dichtmittel 9 gehalten wird, so dass keine Flüssigkeit von der Nassraumseite N durch die Öffnung 7 zur Trockenraumseite T gelangen kann. An dem Gehäuse 3 ist zudem eine zweite elektrische Steckverbindung 6 ausgebildet, die von der Nassraumseite N aus durch einen nassraumseitigen Leitungsstrang 10 kontaktierbar ist. Die zweite Steckverbindung 6 ist als eine Nassraumsteckung ausgebildet und somit entsprechend gegen Feuchtigkeit abgedichtet. Weiterhin ist die zweite Steckverbindung 6 vorzugsweise nach unten gerichtet, so dass sich keine Feuchtigkeit im Anschlussbereich sammeln kann. Die erste 5 und die zweite Steckverbindung 6 sind untereinander elektrisch verbunden, so dass die elektrischen Signale der daran angeschlossenen Leitungsstränge 10 und 11 durch das Gehäuse 3 von der Nassraumseite N zur Trockenraumseite T und umgekehrt geleitet werden können. Der nassraumseitige Leitungsstrang 10 ist vorzugsweise als Leitungsstrang für ein schlüsselloses Zugangskontrollsystem ausgebildet, welches die gewöhnlich im Türgriff der Fahrzeugtür gelagerte Antenne oder einen am Türgriff befindlichen Betätigungstaster mit der zweiten Steckverbindung 6 des elektrischen Bauteils 4 verbindet. An die erste Steckverbindung 5 des elektrischen Bauteils 4 wird ein weiterführender, trockenraumseitiger Leitungsstrang 11 angeschlossen, der die Signale der Antenne und/oder des elektrischen Türschlosses zu weiteren Steuergeräten innerhalb des Fahrzeugs leitet.

### Liste der Bezugszeichen:

- N: Nassraum
- T: Trockenraum

- 1: Fahrzeugtür
- 2: Wandung
- 3: Gehäuse
- 4: elektrisches Bauteil
- 5: erste Steckverbindung
- 6: zweite Steckverbindung
- 7: Öffnung
- 8: Flansch
- 9: Dichtmittel
- 10: nassraumseitiger Leitungsstrang
- 11: trockenraumseitiger Leitungsstrang

## Patentansprüche

1. Fahrzeugtür (1) mit einer Leitungsdurchführung an einer Wandung (2), wobei die Fahrzeugtür (1) von der Wandung (2) in eine Nassraumseite (N) und eine Trockenraumseite (T) geteilt wird, und wobei an der Nassraumseite (N) der Wandung (2) ein in einem Gehäuse (3) befindliches, elektrisches Bauteil (4) angeordnet ist, das eine erste elektrische Steckverbindung (5) und eine zweite elektrische Steckverbindung (6), die von der Nassraumseite (N) aus kontaktierbar ist, aufweist, wobei die erste (5) und die zweite Steckverbindung (6) miteinander elektrisch verbunden sind, **dadurch gekennzeichnet, dass** nur die erste elektrische Steckverbindung (5) eine Öffnung (7) in der Wandung (2) durchdringt und von der Trockenraumseite (T) aus kontaktierbar ist.

2. Fahrzeugtür nach Anspruch 1, **dadurch gekennzeichnet, dass** die erste Steckverbindung (5) abgedichtet ist.

3. Fahrzeugtür nach Anspruch 1 oder 2, **dadurch gekennzeichnet, dass** die erste Steckverbindung (5) mit der Wandung (2) verrastet.

4. Fahrzeugtür nach einem der Ansprüche 1 bis 3, **dadurch gekennzeichnet, dass** die erste Steckverbindung (5) einen nassraumseitigen Flansch (8) aufweist, wobei zwischen dem Flansch (8) und der Wandung (2) ein umlaufendes Dichtmittel (9) gehalten wird.

5. Fahrzeugtür nach einem der Ansprüche 1 bis 4, **dadurch gekennzeichnet, dass** bei einer nicht kontaktierten zweiten Steckverbindung (6) keine Flüssigkeit in das Gehäuse (3) eindringen kann.

6. Fahrzeugtür nach einem der Ansprüche 1 bis 5, **dadurch gekennzeichnet, dass** die zweite Steckverbindung (6) nach unten gerichtet ist.

7. Fahrzeugtür nach einem der Ansprüche 1 bis 6, **dadurch gekennzeichnet, dass** das elektrische Bauteil (4) als Teil eines elektrischen Türschlosses ausgebildet ist.

8. Fahrzeugtür nach einem der Ansprüche 1 bis 7, **dadurch gekennzeichnet, dass** die zweite Steckverbindung (6) von einem nassraumseitigen Leitungsstrang für ein schlüsselloses Zugangskontrollsystem (10) kontaktierbar ist.

9. Fahrzeugtür nach einem der Ansprüche 1 bis 7, **dadurch gekennzeichnet, dass** die zweite Steckverbindung (6) von einem nassraumseitigen Leitungsstrang für eine Türgriffbeleuchtung kontaktierbar ist.

## Claims

1. Vehicle door (1) with a cable bushing on a wall (2), wherein the vehicle door (1) is divided by the wall (2) into a wet chamber side (N) and a dry chamber side (T), and wherein on the wet chamber side (N) of the wall (2) an electrical component (4) located in a housing (3) is arranged, which component comprises a first electrical connector (5) and a second electrical connector (6) which can be contacted from the wet chamber side (N), wherein the first (5) and the second connector (6) are connected to one another electrically, **characterised in that** only the first electrical connector (5) penetrates an opening (7) in the wall (2) and can be contacted from the dry chamber side (T).

2. Vehicle door according to claim 1, **characterised in that** the first connector (5) is sealed.

3. Vehicle door according to claim 1 or 2, **characterised in that** the first connector (5) engages with the wall (2).

4. Vehicle door according to any of claims 1 to 3, **characterised in that** the first connector (5) comprises a wet chamber side flange (8), wherein a peripheral sealing means (9) is held between the flange (8) and the wall (2).

5. Vehicle door according to any of claims 1 to 4, **characterised in that** with a non-contacted second connector (6) no fluid can penetrate into the housing (3).

6. Vehicle door according to any of claims 1 to 5, **characterised in that** the second connector (6) is directed downwards.

7. Vehicle door according to any of claims 1 to 6, **characterised in that** the electrical component (4) is designed as part of an electric door lock.

8. Vehicle door according to any of claims 1 to 7, **characterised in that** the second connector (6) can be contacted by a wet chamber side cable bundle for a keyless access control system (10).

9. Vehicle door according to any of claims 1 to 7, **characterised in that** the second connector (6) can be connected by a wet chamber side cable bundle for a door handle light.

## Revendications

1. Portière de véhicule (1) avec un passage de câble au niveau d'une paroi (2), dans laquelle la portière de véhicule (1) est divisée par la paroi (2) en un côté espace humide (N) et en un côté espace sec (T), et dans laquelle est disposé, au niveau du côté espace humide (N) de la paroi (2), un composant électrique (4) se trouvant dans un boîtier (3), qui présente une première liaison par enfichage (5) électrique et une deuxième liaison par enfichage (6) électrique, avec laquelle un contact peut être établi depuis le côté espace humide (N), dans laquelle la première (5) et la deuxième liaison par enfichage (6) sont raccordées de manière électrique l'une à l'autre, **caractérisée en ce que** seulement la première liaison par enfichage (5) électrique traverse une ouverture (7) dans la paroi (2) et peut être contactée depuis le côté espace sec (T).

2. Portière de véhicule selon la revendication 1, **caractérisée en ce que** la première liaison par enfichage (5) est étanchéifiée.

3. Portière de véhicule selon la revendication 1 ou 2, **caractérisée en ce que** la première liaison par enfichage (5) est enclenchée avec la paroi (2).

4. Portière de véhicule selon l'une quelconque des revendications 1 à 3, **caractérisée en ce que** la première liaison par enfichage (5) présente une bride (8) côté espace humide, dans laquelle un moyen d'étanchéité (9) périphérique est maintenu entre la bride (8) et la paroi (2).

5. Portière de véhicule selon l'une quelconque des revendications 1 à 4, **caractérisée en ce qu'**aucun liquide ne peut pénétrer dans le boîtier (3) lorsqu'aucun contact n'est établi avec la deuxième liaison par enfichage (6).

6. Portière de véhicule selon l'une quelconque des revendications 1 à 5, **caractérisée en ce que** la deuxième liaison par enfichage (6) est dirigée vers le bas.

7. Portière de véhicule selon l'une quelconque des revendications 1 à 6, **caractérisée en ce que** le composant électrique (4) est réalisé en tant que partie d'une serrure de portière électrique.

8. Portière de véhicule selon l'une quelconque des revendications 1 à 7, **caractérisée en ce qu'**un contact peut être établi avec la deuxième liaison par enfichage (6) par un tronçon de câble côté espace humide pour un système de contrôle d'accès (10) sans clé.

9. Portière de véhicule selon l'une quelconque des revendications 1 à 7, **caractérisée en ce qu'**un contact peut être établi avec la deuxième liaison par enfichage (6) par un tronçon de câble côté espace humide pour un éclairage de poignée de portière.
